# EUROPÄISCHE PATENTSCHRIFT

(11) **EP 0 805 065 B1**
(45) Veröffentlichungstag und Bekanntmachung des Hinweises auf die Patenterteilung: **23.05.2001**
(21) Anmeldenummer: 97104376.5
(22) Anmeldetag: 14.03.1997
(51) Int. Cl.: B60N 2/08

(54) **Längsverstellvorrichtung für Kraftfahrzeugsitze**
Longitudinal guide for automotive vehicle seats
Dispositif de guidage longitudinal pour sièges de véhicules automobiles

(30) Priorität: 03.05.1996 DE 19617691
(43) Veröffentlichungstag der Anmeldung: 05.11.1997
(73) Patentinhaber: Faurecia Autositze GmbH & Co. KG, 31655 Stadthagen (DE); Progress-Werk Oberkirch Aktiengesellschaft, 77704 Oberkirch (DE)
(72) Erfinder: Bleul, Thomas, 31655 Stadthagen (DE); Wittig, Manfred, 32457 Porta Westfalica (DE); Schweer-Schröder, Bernd, 31715 Meerbeck (DE); Obrecht, Johannes, 77704 Oberkirch (DE); Schreiner, Otmar, 77704 Oberkirch (DE); Friedrichsen, Jürgen, 20148 Hamburg (DE)
(74) Vertreter: Thielking, Bodo, Dipl.-Ing.

(56) Entgegenhaltungen:
- US-A- 3 930 632
- US-A- 4 720 072
- US-A- 4 817 904
- US-A- 5 447 352

## Beschreibung

Die Erfindung betrifft eine Längsverstellvorrichtung für Kraftfahrzeugsitze nach dem Oberbegriff des Anspruchs 1.

Derartige bekannte Längsverstellvorrichtungen werden unter anderem bei Kraftfahrzeugen verwendet, welche zwei seitliche Gleitschienenpaare aufweisen und ein zentrales vorderes Gleitschienenpaar, das eine mit dem Sitz verbundene Oberschiene aufweist, die auf chassisfesten Rollen abläuft und in einer chassisfesten Unterschiene geführt bzw. gehalten wird.

Als nachteilig erweist es sich bei derartigen Längsverstellvorrichtungen, daß die Oberschienen im Crashfall einseitig belastet werden und möglicherweise ausreißen können.

Aus der US-A-4 817 904 ist beispielsweise auch eine Längsverstellvorrichtung bekannt, bei der die chassisfeste Unterschiene über die Länge verteilt angeordnete Durchgangsöffnungen zur Sitzverstellung aufweist.

Ausgehend von dem eingangs genannten Stand der Technik liegt der Erfindung die Aufgabe zugrunde, eine Längsverstellvorrichtung der als bekannt vorausgesetzten Art so auszubilden, daß sie im Crashfall gleichmäßig belastet wird und eine sichere Verriegelung ermöglicht, ohne daß hierzu besonders große Profilstärken erforderlich sind.

Die Lösung dieser Aufgabe erfolgt mit den Merkmalen des Kennzeichnungsteils von Anspruch 1.

Bevorzugte Ausgestaltungen der Erfindung sind in den Unteransprüchen beschrieben.

Die erfindungsgemäße Längsverstellvorrichtung erlaubt ein gleichmäßiges Abtragen der Last vom Sitz auf das Chassis.

Nachstehend wird eine bevorzugte Ausführungsform der Erfindung anhand der Zeichnung im einzelnen beschrieben. Es zeigen:
- Figur 1 -: einen Querschnitt durch die Längsverstellvorrichtung im verriegelten Zustand,
- Figur 2 -: den Querschnitt gemäß Figur 1 im entriegelten Zustand.

Eine mit einem nicht dargestellten Kraftfahrzeugsitz verbundene, im wesentlichen U-förmige Oberschiene 2 läuft auf mehreren chassisfest gelagerten Laufrollen 3 ab. Die Oberschiene 2 wird in einer etwa C-förmigen Unterschiene geführt. Auf den nach unten gekröpften Schenkeln 1a und 1b der Unterschiene 1 sitzen Gleitkörper 11 und 12. Die beiden Gleitkörper 11 und 12 greifen in die Rinnen 2f und 2g der Oberschiene ein. Die Unterschiene 1 ist über Befestigungsflansche 1c am Fahrzeugboden befestigt. An die nach oben weisende Innenseite des horizontalen Basisschenkels der Unterschiene 1 sind zueinander parallel und in Fahrzeuglängsrichtung verlaufende senkrechte Flansch 1e und 1d angeschweißt. Zwischen den beiden Flanschen 1e und 1d befindet sich ein quer verlaufendes Distanzblech 4 mit einer Aussparung 4a.

An der Unterschiene 1 ist seitlich eine quer zur Längsrichtung verlaufene Hülse 13 angeschweißt, in der ein erster Verriegelungsbolzen 6a quer verschieblich gelagert ist. Der erste Verriegelungsbolzen 6a durchgreift in Verriegelungsstellung eine Durchgangsöffnung 2a im Seitenschenkel 2e der Oberschiene 2. Die Durchgangsöffnung 2a ist im dargestellten Ausführungsbeispiel in einer Verstärkungsschiene 10 aus Metall vorgesehen.

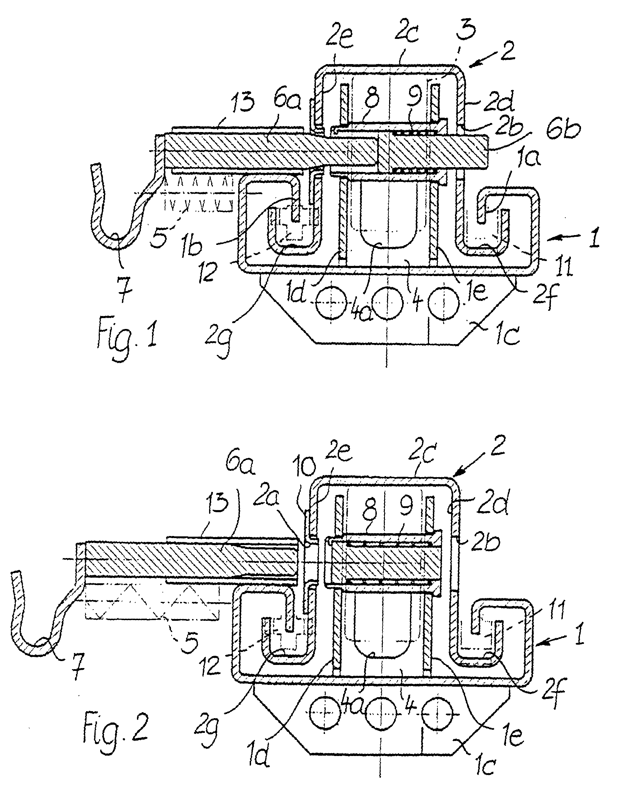

Mit der Hülse 13 fluchtet eine Hülse 8, die zwischen den vertikal sich erstreckenden Flanschen 1e und 1d befestigt ist. In der Hülse 8 ist ein zweiter Verriegelungsbolzen 6b fluchtend mit dem ersten Verriegelungsbolzen 6a quer verschieblich gelagert. Der zweite Verriegelungsbolzen 6b greift im verriegelten Zustand gemäß Figur 1 mit seiner Frontseite durch eine Durchgangsöffnung 2b im Seitenschenkel 2d der Oberschiene 2.

Der zweite Verriegelungsbolzen 6b steht unter der Wirkung einer als Druckfeder ausgebildeten Rückstellfeder 9. Diese Rückstellfeder 9 stützt sich einerseits an einem inneren Kragen der Hülse 8 ab und andererseits an einem umlaufenden Bund des zweiten Verriegelungsbolzens 6b.

Der erste Verriegelungsbolzen 6a steht unter der Wirkung einer Zugfeder 5. Die Federkraft der Zugfeder 5 ist größer als die Federkraft der als Druckfeder ausgebildeten Rückstellfeder 9. Dies hat zur Folge, daß der Verriegelungsbolzen 6a bei passend gegenüberliegenden Durchgangsöffnungen 2a und 2d den zweiten Verriegelungsbolzen 6b in die in Figur 1 dargestellte Verriegelungsposition drückt.

Zum Entriegeln wird der erste Verriegelungsbolzen 6a über eine Zughaken 7 unter Überwindung der Kraft der Zugfeder 5 gemäß Figur 2 nach links gezogen, bis das vordere Ende des Verriegelungsbolzens 6a aus der Durchgangsöffnung 2a ausgetaucht ist. Gleichzeitig wird der zweite Verriegelungsbolzen 6b unter der Wirkung der Druckfeder 9 bis zu einem linken Anschlag verschoben, wobei das vordere und in den Zeichnungen rechte Ende des zweiten Verriegelungsbolzens 6b aus der Ausnehmung 2b ausgetaucht ist. In dieser entriegelten Lage kann der Sitz in Längsrichtung verschoben werden.

Die mehrfach vorgesehenen Laufrollen 3 laufen auf der Innenseite des Basisschenkels 2c der im wesentlichen Uförmigen Oberschiene 2 ab.

## Patentansprüche

1. Längsverstellvorrichtung für Kraftfahrzeugsitze mit einer sitzfesten, in einer chassisfesten Unterschiene (1) geführten Oberschiene (2), die ein U-förmiges Grundprofil aufweist und entlang eines Seitenschenkels (2e) gleichmäßig über die Länge verteilt angeordnete Durchgangsöffnungen (2a) aufweist, die zur Aufnahme eines chassisfest quer zur Längsrichtung verschieblich geführten Verriegelungsbolzens ausgebildet sind, welcher unter Federvorspannung in die Verriegelungsstellung und gegen Federvorspannung in die Freigabestellung verschieblich ist,
dadurch gekennzeichnet,
daß entlang des zweiten Seitenschenkels (2d) mit den Durchgangsöffnungen des ersten Seitenschenkels (2e) fluchtende, zweite Durchgangsöffnungen (2b) vorgesehen sind, die zum Eingriff eines chassisfest quer zur Längsrichtung verschieblich geführten zweiten Verriegelungsbolzens (6b) ausgebildet sind, wobei der zweite Verriegelungsbolzen (6b) mit dem ersten Verriegelungsbolzen (6a) fluchtet und wobei der erste Verriegelungsbolzen (6a) zum Verriegeln auf der Rückseite des zweiten Verriegelungsbolzens (6b) anliegt und mittels der Federvorspannung den zweiten Verriegelungsbolzen (6b) unter Überwindung der Rückstellkraft von dessen Rückstellfeder (9) in die zweite Durchgangsöffnung (2b) verschiebt, wobei der zweite Verriegelungsbolzen (6b) unter der Kraft seiner Rückstellfeder (9) aus seiner gegenüberliegenden Durchgangsöffnung austaucht, sobald der erste Verriegelungsbolzen den zweiten Verriegelungsbolzen (6b) freigibt.

2. Längsverstellvorrichtung nach Anspruch 1,
dadurch gekennzeichnet,
daß der erste Verriegelungsbolzen (6a) unter der Vorspannung einer Zugfeder (5) steht.

3. Längsverstellvorrichtung nach Anspruch 1 oder 2,
dadurch gekennzeichnet,
daß der zweite Verriegelungsbolzen (6b) in einer ihn umgebenden Hülse (8) geführt ist und seine Rückstellfeder (9) einerseits innen an einem Kragen der Hülse (8) und andererseits an einem Bund des zweiten Verriegelungsbolzens (6b) anliegt.

## Claims

1. Longitudinal adjusting device for motor vehicle seats having a top rail (2) fixed on the seat and guided in a bottom rail (1) fixed on the chassis, with the top rail having a U-shaped basic profile and provided along one side arm (2e) with full-length through openings (2a) spaced out uniformly over the length and designed to hold a locking bolt fixed on the chassis and guided displaceable across the longitudinal direction, wherein the locking bolt is movable into the locking position under spring tension and into the release position against spring tension, characterised in that second full-length through openings (2b) are provided along the second side arm (2d) and aligned with the through openings of the first side arm (2e), the second through openings are designed for the purpose of engaging a second locking bolt (6b) which is guided fixed on the chassis and displaceable across the longitudinal direction, wherein the second locking bolt (6b) is in alignment with the first locking bolt (6a) and this first locking bolt (6a) for the purpose of locking adjoins the back of the second locking bolt (6b) and by means of the spring pretension moves the second locking bolt (6b) into the second full-length through opening (2b) on overcoming the resetting force of its resetting spring (9) so that the second locking bolt (6b) passes out of its opposite through opening under the force of its resetting spring (9) as soon as the first locking bolt releases the second locking bolt (6b).

2. Longitudinal adjusting device according to claim 1 characterised in that the first locking bolt (6a) is under the pretension of a tension spring (5).

3. Longitudinal adjusting device according to claim 1 or 2 characterised in that the second locking bolt (6b) is guided in a sleeve (8) enclosing same and its resetting spring (9) adjoins on one side on the inside a collar of the sleeve (8) and on the other side a collar of the second locking bolt (6b).

## Revendications

1. Dispositif de guidage longitudinal pour sièges de véhicules automobiles comprenant une coulisse supérieure (2) en forme de U qui est fixée au siège du véhicule et conduite dans une glissière inférieure (1) reliée fixement au châssis, ainsi que des trous débouchants (2a) qui sont destinés à accueillir un boulon de verrouillage solidaire du châssis et déplaçable perpendiculairement par rapport au sens de la longueur et sont disposés le long d'une branche latérale (2e) et répartis régulièrement sur toute la longueur, le boulon de verrouillage étant soumis à la précontrainte d'un ressort, lors du verrouillage, et libéré en surmontant la précontrainte, lors du déverrouillage,
caractérisé en ce que
d'autres trous débouchants (2b), en alignement avec ceux de la première branche (2e), sont disposés le long de la deuxième branche latérale (2d) et destinés à accueillir un deuxième boulon de verrouillage (6b) qui, solidaire du châssis et déplaçable transversalement par rapport au sens de la longueur, est disposé en alignement avec le premier boulon de verrouillage (6a), le premier boulon de verrouillage ( 6a) portant contre le dos du deuxième boulon de verrouillage (6b) lors du verrouillage, et poussant ce dernier dans le deuxième trou débouchant (2b) par précontrainte, en surmontant la force élastique du ressort de rappel (9), le deuxième boulon de verrouillage (6b) sortant de son trou opposé sous l'effet de la force élastique de son ressort de rappel (9), dès que le premier boulon de verrouillage le libère.

2. Dispositif de guidage longitudinal selon la revendication 1,
caractérisé en ce que
le premier boulon de verrouillage (6a) est soumis à la précontrainte d'un ressort de traction (5).

3. Dispositif de guidage longitudinal selon la revendication 1 ou 2,
caractérisé en ce que
le deuxième boulon de verrouillage (6b) est conduit dans une douille (8), qui l'entoure, et que son ressort de rappel (9) porte, d'une part, contre un collet de la douille (8) et, d'autre part, contre une embase du deuxième boulon de verrouillage (6b).
